Europäisches Patentamt

European Patent Office

Office européen des brevets

(11) Veröffentlichungsnummer: **0 180 739**

**A2**

(12) ## EUROPÄISCHE PATENTANMELDUNG

(21) Anmeldenummer: 85111523.8

(22) Anmeldetag: 12.09.85

(51) Int. Cl.⁴: **C 04 B 26/02**
**C 04 B 41/63**

(30) Priorität: 02.11.84 DE 3440085

(43) Veröffentlichungstag der Anmeldung:
14.05.86 Patentblatt 86/20

(84) Benannte Vertragsstaaten:
AT BE CH DE FR GB IT LI LU NL SE

(71) Anmelder: DYNAMIT NOBEL AKTIENGESELLSCHAFT
Postfach 1261
D-5210 Troisdorf, Bez. Köln(DE)

(72) Erfinder: Höver, Alexander
Eifelstrasse 25
D-5210 Troisdorf-Spich(DE)

(72) Erfinder: Simon, Manfred, Dr.
Schellenberg 17
D-5216 Niederkassel(DE)

(72) Erfinder: Spiess, Karl-Heinz
Schwellenbach 11
D-5203 Much(DE)

(72) Erfinder: Zündorf, Willi
Dorfstrasse 34
D-5210 Troisdorf-Müllekoven(DE)

(54) **Verfahren zur Herstellung von flexiblen Formkörpern aus hochgefüllten, härtbaren Massen.**

(57) Flexible und durchbiegbare Formkörper werden aus hochgefüllten härtbaren Massen mit Gehalten von nur 2,0 bis 7,0 Gew.-% Harzbindemitteln dadurch hergestellt, daß die Massen zu Rohkörpern gepreßt, nach der Entformung gehärtet und der spröde und harte Rohkörper mit einer in den Körper eindringenden Harzimprägnierung versehen und gehärtet wird.

EP 0 180 739 A2

Croydon Printing Company Ltd.

Troisdorf, den 22.10.84
OZ 84052   Dr. La./Bs.

DYNAMIT NOBEL AKTIENGESELLSCHAFT

Troisdorf, Bez. Köln

Verfahren zur Herstellung von flexiblen Formkörpern aus hochgefüllten, härtbaren Massen

Die vorliegende Erfindung betrifft ein Verfahren zum Herstellen von Formkörpern aus hochgefüllten, härtbaren Massen, welche auch in geringer Plattenstärke neben hoher Biegefestigkeit eine wesentlich verbesserte Elastizität aufweisen.

Dadurch findet ein Handwerker beim Verlegen von Platten für z.B. Dächer, Böden, Bäder oder Fassaden die gewohnten Materialeigenschaften vor und kann insbesondere die Platten behauen, nageln und mit dem Schieferhammer lochen.

Diese Elastizität und Biegefestigkeit ist eine besonders wichtige Materialeigenschaft, die den bekannten harzgebundenen hochgefüllten Formkörpern fehlte.

-2-

Aus dem europäischen Patent 0051 821 ist ein Verfahren zum Herstellen von keramikähnlichen dessinierten Formkörpern bekannt, bei dem durch Verpressen von rieselfähigen Massen mit geringen Harzanteilen von 2 bis 7 Gew.-% dünne Platten entstehen, deren Entformung vor dem Härten möglich ist. Gegebenenfalls befindet sich eine Dessinierungsschicht bzw. Lackierung auf der Oberfläche.

So hergestellte Platten von z.B. 6 mm Plattenstärke besitzen bei genügender Steifigkeit bzw. Biegefestigkeit von beispielsweise 35 N/mm$^2$ eine ungenügende Elastizität. Platten von 200 x 300 mm haben z.B. eine Durchbiegung von praktisch O vor dem Bruch und sind zumindest für Dachplatten ungeeignet. Eine Bearbeitung mit dem Hammer ist nicht möglich.

Es bestand daher die Aufgabe, aus härtbaren, hochgefüllten Massen genügend flexible und biegefeste harzgebundene Formkörper herzustellen.

Als entscheidend für die physikalischen Eigenschaften und besonders die Flexibilität der fertigen Formkörper ist allgemein Menge und Elastizität der Harze im Rohkörper anzusehen, wobei eine erhöhte Menge die verbesserte Elastizität der Formkörper erwarten lassen. Jedoch führen erhöhte Harzanteile von z.B. 10% der Formmasse und elastische Harze zu nicht rieselfähigen Massen und klebrigen Formkörpern, welche ohne Härtung nicht entformt werden können. Eine Härtung in einer Form ist aber teuer und verhindert die Großserienfertigung. Somit scheiterte bisher die rationelle Serienfertigung, soweit genügend flexible Formkörper herzustellen waren.

Überraschend wurde nun gefunden, daß die gestellte Aufgabe durch Verwendung von klebefreien Harzen in geringen Mengen in der Formmasse der Rohkörper gelöst wird, obgleich dann gehärtete Rohkörper der an sich unzureichenden Biegefestigkeit von nur 5 bis 10 $N/mm^2$ entstehen. Die erfindungsgemäße Maßnahme der nachträglichen Imprägnierung des Rohkörpers mit elastischen Harzen auf einer oder beiden Seiten und deren Härtung erbringt dann nicht nur die erforderliche Biegefestigkeit im Bereich von 20 bis 40 $N/mm^2$, sondern überraschend auch hohe Flexibilität, Durchbiegung von mehreren mm, je nach Belastung, und die mechanische Bearbeitbarkeit der fertigen Formkörper.

Wir haben festgestellt, daß bemerkenswerterweise aus Rohkörpern hoher Biegefestigkeit von z.B. 20 bis 30 $N/mm^2$ durch gleichartige Imprägnierung solche flexiblen Formkörper nicht entstehen.

Gegenstand der Erfindung ist daher das Verfahren zum Herstellen von flexiblen Formkörpern aus hochgefüllten, härtbaren Massen auf Basis von duroplastischen Kunststoffen, wobei ein Rohkörper aus härtbaren, rieselfähigen Massen mit Gehalten von 2,0 bis 7,0, vorzugsweise 3,5 bis 5,0 Gew.-% Harzbindemitteln, ggf. 1 bis 5 Gew.-% Lösungsmitteln wie Wasser, Alkohol, Styrol oder deren Mischungen, ggf. ein Härter oder eine Kombination mit einem organischen oder anorganischen Härtungssystem,

98 bis 88, vorzugsweise 96,5 bis 90 Gew.-% Füllstoffe wie Quarzsand, Quarzmehl, Gesteinsmehle wie Basaltmehl, Schwerspat, Kreide, Schlacken-, Schwerspat-, Schiefer- und Korund-Mehl o. dgl. bzw. deren Mischungen einer Korngröße von 0 bis 1 mm, vorzugsweise 0-0,5 mm und ggf. Hilfsstoffen wie Beschleunigern, Farbmitteln o. dgl.
ggf. nach Trocknen bis zum Entstehen rieselfähiger Massen
durch Formpressen hergestellt wird, der Rohkörper entformt, auf der Oberfläche mit einem Lack und/oder einer Harzlösung versehen und

0180739

anschließend, ggf. zusätzlich nach dem Entformen, bei erhöhter Temperatur gehärtet wird,

gekennzeichnet durch die Maßnahmen:

a) daß ein Rohkörper mit geringer Biegefestigkeit von 1 bis 15, vorzugsweise 2 bis 10 N/mm$^2$, durch Verwendung von duroplastischen Harzen als Harzbindemittel der rieselfähigen Masse durch

b) Verpressen bei Drucken von 100 bis 500, vorzugsweise 150 bis 300 kp/cm$^2$ hergestellt und entformt,

c) gehärtet

d) der gehärtete Rohkörper auf der Oberfläche ein- oder beidseitig mit einer in den Körper eindringenden, elastischen Imprägnierung einer Lösung mit Harzanteilen von 50 bis 100, vorzugsweise 80 bis 100 Gew.-% eines flexiblen und elastischen Harzes versehen und danach bei Temperaturen von 100 bis 180° C gehärtet und

e) ggf. lackiert und gehärtet wird.

Art und Eigenschaft der Harze einerseits als Bindeharze für die Rohkörper und andererseits als Harzbestandteile der Imprägnierlösung sind sorgfältig auszuwählen.

Als Harze der Bindemittel für die Rohkörper sind alle Harze geeignet, welche je nach der zugesetzten Menge von höchstens ca. 7 Gew.-% eine rieselfähige Masse ergeben und gehärtete Formkörper von maximal ca. 15 N/mm$^2$ entstehen lassen.

Als Harze für die Imprägnierlösung sind alle als flexibel bekannten Harze oder durch Zusätze genügend flexibel einstellbare Harze geeignet, die aus Rohkörpern von geringer Biegefestigkeit imprägnierte gehärtete Formkörper mit der genannten hohen Biegefestigkeit verfahrensgemäß entstehen lassen.

Als wärmehärtende Harze zur Herstellung der formbaren Masse des Rohkörpers eignen sich besonders Phenolharze, Melaminharze, Polyesterharze, Epoxidharze, Acrylatharze oder Polyurethanharze. Harze, die eine klebefreie Entformung der ungehärteten Rohkörper gestatten, sind bevorzugt. Jedenfalls geeignet sind harte und spröde Harze, doch erfüllen auch elastische Harze, z.B. Polyesterharze, die nachfolgende Bedingung.

Die Auswahl der Harze kann, bei Zusatzmengen bis ca. 7 Gew.-% berechnet als lösungsmittelfreies Harz, durch die physikalischen Eigenschaften der Rohkörper nach dem Härten z.B. anhand deren Biegefestigkeit bis höchstens 15 $N/mm^2$ getroffen werden. Die Menge der Harze in der Formmasse der Rohkörper kann durch die Anforderung an die geringe Biegefestigkeit, je nach Art und Eigenschaft des jeweiligen Harzes, auf weniger als 7 Gew.-% begrenzt sein.

Die Menge der Harze kann weiter durch die Forderung nach Rieselfähigkeit der Formmasse und Entformbarkeit der ungehärteten Rohkörper ohne Kleben begrenzt sein.

Andererseits muß die Masse der jeweiligen Harze einen genügenden Zusammenhalt des Rohkörpers bei der Entformung nach Pressen mit mindestens 100 $kg/cm^2$ gewährleisten.

Hilfsmittel zur Einhaltung dieser Forderungen sind, neben der Körnung der Füllstoffe, besonders feinteilige Bestandteile, wie Ca-Stearat, z.B. Ceasit, fein gemahlene Pigmente und flexible, feinteilige Fasermaterialien wie Glasfaser, Polyamid- und Polyurethanfaser, Steinwolle- oder Mineralfaser oder flexible körnige Füllstoffe wie Glashohlkugeln, Glimmer, Graphit, Eisenglimmer, Schiefermehl bzw. -korn oder auch Ca-Stearat, Zn-Stearat oder Stearinsäure.

- 6 -

Fasermaterialien sollen Längen bis höchstens 3 mm, vorzugswiese bis 2 mm aufweisen. Die große Oberfläche der Fasermaterialien kann auch in kleinen Gewichtsanteilen die Klebrigkeit des ungehärteten Rohkörpers verhindern, durch hohe Absorption des Harzes.

Entsprechendes gilt für poröse Füllstoffe und Füllstoffe mit hoher Oberfläche wie Aerosil, Bimsmehl, Blähglimmer, Ca-Stearat o. dgl., jedoch auch für den Feinanteil aller verwendeten Füllstoffe.

Das Einmischen von elastischen Fasern und den genannten elastischen Füllstoffen soll am Ende des Mischvorgangs erfolgen. Dadurch wird die Elastizität dieser Materialien genutzt und die Elastizität auf das System der Formmasse übertragen. Auch die hohe Harzbindung von elastischen Fasermaterialien und sehr feinteiligen Füllstoffen und besonders sehr voluminösen Füllstoffen macht es zweckmäßig, diese Stoffe erst am Ende des Mischvorgangs in die Harzmasse einzuarbeiten.

Der Feinanteil der Füllstoffe darf andererseits nicht zu groß sein, da ein genügender Anteil grobkörniger Füllstoffe die erforderliche Porosität der Rohkörper sicherstellt.

Ein Beitrag für genügende Porosität der gehärteten Rohkörper liefern weiter Lösungsmittel aller Art, wie Wasser als Feuchte der Füllstoffe oder als Lösungsmittel der Harze, niedrig siedende Alkohole, wie Methanol, Ethanol, Glycol o. dgl. als Lösungsmittel der Harze sowie Styrol oder der Zusatz dieser Lösungsmittel direkt in die Harzlösung.

Um die Rieselfähigkeit zu gewährleisten, ist erforderlichenfalls die Feuchte aus Wasser oder Lösungsmitteln vor dem Verpressen zu vermindern. Eine zu weit gehende Trocknung ist aber zu vermeiden, da das die Härtung behindern oder ggf. verhindern kann.

Die zur Verformung fertige Formmasse soll bevorzugt eine Feuchte bzw. Restfeuchte aus diesen Lösungsmitteln von 0,6 bis 1,8, vorzugsweise 1,0 bis 1,5 Gew.-% aufweisen.

Da die Feuchte der Masse im allgemeinen nach dem Mischen höher ist , ist eine Trocknung der Masse bei z.B. 80-120°C, ggf. bei vermindertem Druck vorzusehen. Nach dem Trocknen erfolgt eine Versiebung, z.B. mit Rüttelsieben von 0,5 bis 2 mm Maschenweite.

Eine genügende Porosität der Rohkörper nach dem Härten bei 100 bis 180° C, vorzugsweise 140 bis 170°C, sichert bei der nachfolgenden Imprägnierung mit flexiblen Harzen das Eindringen genügender Mengen von Imprägnierharz von der Oberfläche her.

Pressdrucke von 100 bis 500, vorzugsweise 150 bis 300 kp/cm$^2$, genügen im allgemeinen, um genügende Festigkeit bei der Entformung der ungehärteten Rohkörper sicherzustellen.

Die kostspielige Härtung in der Form ist daher nach dem erfindungsgemäßen Verfahren entbehrlich.

Eine Strukturierung oder Dessinierung der Rohkörper erfolgt durch entsprechende Strukturierung der Presswerkzeuge, so daß kein gesonderter Arbeitsgang erfolgen braucht.

Die Rohkörper haben aber durchaus nicht die für die fertigen Formkörper erforderlichen Eigenschaften. Insbesondere fehlt die erforderliche Flexibilität und Festigkeit.

Aus spröden, unflexiblen Platten können nun allgemein nicht hochflexible und biegefeste, fertige Platten entstehen. Nach dem vorliegenden Verfahren ist das aber überraschend möglich. Harte, steife und spröde Rohplatten sind erfindungsgemäß die Voraussetzung für das Entstehen hochflexibler und schlagzäher fertiger Platten mit ggf. hoher Durchbiegung.

Überraschend wurde jedoch gefunden, daß die verfahrensgemäß hergestellten Rohkörper mit den genannten Eigenschaften sogar Platten besonders hoher Flexibilität und besonders guter Eigenschaften ergeben.

Diese Eigenschaften erhalten die Rohkörper durch die verfahrensgemäße Imprägnierung mit elastischen bzw. elastisch eingestellten flexiblen Harzen, die durch blosse Behandlung der Oberfläche auf einer oder beiden Seiten in den Rohkörper eindringen, und die anschließende Härtung dieser Harze.

Die Imprägnierharze dringen in den Rohkörper bis zur vollständigen oder teilweisen Sättigung ein.

Die Imprägnierung und die Harze der Imprägnierlösung sollen so beschaffen sein, daß die Biegefestigkeit nach dem Härten im Bereich von 20 bis 30, vorzugsweise 25 bis 30 N/mm$^2$ liegt. Höhere Biegefestigkeiten von 35 bis 40 N/mm$^2$ sind nicht erwünscht. Es tritt eine Durchbiegung nach DIN 51090 von 2-16 mm auf. Bei Durchbiegungen ab 6 bis 8 mm, bei manchen Rezepturen schon ab 2,5 mm, ist die nicht vorhersehbare Eigenschaft der Nagelbarkeit und Bearbeitbarkeit mit dem Schieferhammer sowie der Behaubarkeit gegeben, die der Handwerker gewohnt ist und erwartet. Die Durchbiegung wird an Platten des Formats 200x300x4 mm gemessen, die sich u.a. als Dachplatten eignen.

Für andere Zwecke, beispielsweise als Fassadenplatten, Wandplatten im Inneren von Gebäuden und Bodenplatten kann eine geringere Durchbiegung ausreichend sein, vor allem für Platten größerer Dicke.

Diese Eigenschaften werden durch die Art der Harze als Harze von hoher Flexibilität und ihre Menge insoweit sichergestellt, als die Harze aufgrund ihrer Viskosität im Zusammenwirken mit der gegebenen Porosität der Rohplatte in das Innere der Platte eindringen, wozu gegebenenfalls ein einseitiger Harzauftrag genügt. Als Harze hoher Flexibilität haben sich insbesondere die Gruppe der ungesättigten Polyesterharze und der Polyisocyanate geeignet erwiesen, weiterhin sind Epoxidharze und Acrylatharze von bekannt hoher Flexibilität geeignet.

Es werden 120 bis 800, vorzugsweise 340 bis 500 g Harzlösung je $m^2$ Oberfläche der Rohplatte aufgetragen. Die fertigen Platten enthalten Harzanteile der Imprägnierharze von 2 bis 20, bevorzugt 4 bis 15, sehr bevorzugt 5 bis 10 Gew.-%, bezogen auf das Gewicht des Rohkörpers.

Härter und Katalysatoren für die Härtung müssen in üblicher Weise zugegeben werden.

Die bevorzugte Viskosität der Imprägnierharze ist insbesondere eine solche von 20 bis 120 Sekunden mit dem DIN-Becher 4 nach DIN 53 211.

Die Viskosität kann durch die Menge der Lösungsmittel und erforderlichenfalls der Zugabe von Lösungsmitteln eingestellt werden.

Die Imprägnierharze sollen im allgemeinen Harzanteile von 50 bis 100, vorzugsweise 80 bis 100 Gew.-% der flexiblen Harze aufweisen. Geeignete Lösungsmittel können Styrol, Acrylate oder auch andere ungesättigte Monomere sein.

Die Imprägnierung erfolgt mit geeigneten Auftragsmethoden, insbesondere durch Gießen oder Spritzen, Walzenauftrag mit geeigneten Anlagen.

Bei der Imprägnierung werden auf z.B. Förderbändern die Platten mit einer Geschwindigkeit von 30 bis 100 m/min. bewegt. Die Aushärtung erfolgt ruhend oder bevorzugt im Durchlauf in Öfen und ist je nach Art der Harze in 20 bis 35 Minuten beendet.

0180739

Als Dekor, Witterungsschutz und gleichzeitig als weitere Dessinierung bzw. Farbgebung können die Platten eine Lackierung erhalten. Diese kann nach der Härtung der Imprägnierharze , bevorzugt jedoch nass in nass vor der Härtung der Imprägnierharze erfolgen.

Geeignete Lacke können an sich beliebiger Art sein, bevorzugt jedoch auf Basis von Polyurethanen oder Polymethylmethacrylaten.

Das Porenvolumen der Rohplatten soll vorzugsweise zwischen 15 und 25 % liegen. Das spezifische Gewicht liegt vorzugsweise zwischen 1,7 und 1,85.

In Zusammenwirkung mit dieser Imprägnierlösung von sehr flexiblen Harzen, der festgelegten, an sich minderwertigen Eigenschaft der Rohkörper werden so verfahrensgemäß besonders die hohen Biegefestigkeiten der Platten eingestellt und die Durchbiegung von praktisch 0 auf mindestens 6 bis 8 mm gesteigert. Weiter werden durch die erfindungsgemäßen Maßnahmen überraschend wesentliche Verbesserungen des Verfahrens wie insbesondere die Entformung ungehärteter Rohplatten erreicht.

Es sind Platten herstellbar, die eine handwerkliche Verarbeitung beim Verlegen, z.B. Schneiden mit der Trennscheibe Behauen mit dem Schieferhammer und Brechen nach Anreißen zulassen. Bei Verlegung auf Dächern kann das Dach begangen werden.

Beispiel 1: Rohplatte - Harzanteil        Vergleich
                         ca. 7 Gew.-%

2.15o Gew.-Teile Quarzmehl W 10 und 2.500 Gew.-Teile
Quarzsand F 32 werden in einem Labormischer (Eirich-Intensiv-Mischer Type R 02) 15 Sekunden vorgemischt. Danach erfolgt bei langsam laufendem Rührer innerhalb von 2 Minuten die Zugabe von 500 Gew.-Teilen Phenolharz T 777 (70 Gew.-%ige wässrige Lösung). Anschließend wird noch 3 Minuten weiter gerührt. Die feuchte, leicht klebende Masse wird auf einem Blech ausgebreitet und innerhalb von 20 Minuten bei 80°C in einem Trockenschrank auf eine Restfeuchte von ca. 1,2 Gew.-% getrocknet. Nach dem Abkühlen wird das Material durch ein Sieb von 1 mm Maschenweite geschickt. Man erhält so eine rieselfähige Masse, die sich in einer Preßform bei Raumtemperatur mit einem Druck von 300 kp/cm$^2$ zu Platten verpressen und entformen läßt. Die Rohplatte wird auf einer stabilen Unterlage von 170°C ausgehärtet. Die Platte (Format 150 x 200 x 6 mm) besitzt eine Biegefestigkeit von 30 N/mm$^2$.

Beispiel 2: Rohplatte - Harzanteil        Vergleich
                         ca. 5 Gew.-%

7,14 Gew.-Teile Phenolharz T 777 (70 Gew.-% ig)
                                    (Dynamit Nobel AG)
50,00 Gew.-Teile Quarzsand F 32   (Quarzwerke Frechen)
45,00 Gew.-Teile Quarzmehl W 8    (Quarzwerke Frechen) wird entsprechend Beispiel 1 gemischt, getrocknet, gesiebt, verpreßt und ausgehärtet.

Die Biegefestigkeit der ausgehärteten Platten (Format 150 x 200 x 6 mm) beträgt ca. 20 N/mm$^2$.

Beispiel 3: Rohplatten - Harzanteil
                        ca. 5 Gew.-%

Entsprechend Beispiel 1 wird eine rieselfähige Masse
aus 7,14 Gew.-Teile Phenolharz T 777 (70 Gew.-%ig)
50,00 Gew.-Teile Quarzsand   F 32
43,00 Gew.-Teile Quarzmehl   W 8
 1,00 Gew.-Teile Ceasit 1
 1,00 Gew.-Teile Eisenoxid-schwarz 0095
 0,20 Gew.-Teile Polyamidfaser FPA 233

Bei einem 500 kg Ansatz werden Quarzsand F 32, Ceasit
und Eisenoxid in einem Eirich-Intensiv-Mischer Type R 15
15 Sekunden vorgemischt, dann bei laufendem Rührer innerhalb von 2 Minuten das Phenolharz zugegeben. Danach
wird in 20 Sekunden das Quarzmehl W 8 zugegeben (Nachmischzeit 5 Minuten).

Die erhaltene feuchte Masse wird in einem Fließbett-
Trockner innerhalb von 1,5 Minuten bei einer Temperatur
von 125°C kontinuierlich auf eine Restfeuchte von ca.
1,4 Gew.-% getrocknet. In die getrocknete, rieselfähige
Masse werden dann im Intensiv-Mischer die Polyamidfasern
(Faserlänge 2 mm) in 20 Sekunden untergemischt. Man
erhält eine gut rieselfähige Masse, die sich wie unter
Beispiel 1 beschrieben, einwandfrei in einer Formpresse
mit strukturiertem Stempel verpressen läßt. Die Aushärtung erfolgt in einem Schaukeltrockner innerhalb von
55 Minuten bei 170°C auf stabilen Unterlagen.

Die Biegefestigkeit der ausgehärteten Platten im Format
200 x 300 x 4 mm mit strukturierter Oberfläche beträgt
5 bis 8 N/mm$^2$.

0180739

Beispiel 4: Rohplatten - Harzanteil
ca. 4 Gew.-%

Entsprechend Beispiel 3 wird folgende Masse verarbeitet:

 5,78 Gew.-Teile Phenolharz T 777 (70 Gew.-%ig)
60,00 Gew.-Teile Quarzsand  F 32
34,00 Gew.-Teile Quarzmehl W 8
 1,00 Gew.-Teile Ceasit 1
 1,00 Gew.-Teile Eisenoxid 0095

Die Biegefestigkeit der ausgehärteten Platten im Format
200 x 300 x 4 mm mit strukturierter Oberfläche beträgt
ca. 6 N/mm$^2$.

Beispiel 5: Rohplatten - Harzanteil ca. 3,5 Gew.-%

Nach Beispiel 1 wird folgender Ansatz verarbeitet:

  250 Gew.-Teile Phenolharz T 777 (70 Gew.-%ig)
   25 Gew.-Teile Glykol
3.507 Gew.-Teile Quarzsand F 32
1.278 Gew.-Teile Quarzmehl W 8
   25 Gew.-Teile Ceasit 1
   50 Gew.-Teile Eisenoxid-schwarz 0095

Die Biegefestigkeit der ausgehärteten Platten im Format
200 x 300 x 4 mm mit strukturierter Oberfläche beträgt
4 N/mm$^2$.

Beispiele 6 a und b: Imprägnierung          Vergleich

a) Mit nachfolgender Rezeptur wurden Rohplatten aus Beispiel 2 mittels einer Gießanlage von Ober- und Unterseite mit je 150 g/m$^2$ beschichtet.

38,8 g Phenolharz T 55        (Dynamit Nobel AG)
 2,3 g Polyurethanharz DN 317 (Duroplast Chemie,Neuwied)
19,4 g Ethanol
19,4 g Wasser
20,0 g Colanyl-Oxid-schwarz B
 1,0 g Aerosil TS 100         (Degussa) 10 Sekunden nach Auftragen der Beschichtung ist diese
vollständig in die Platten eingedrungen, so daß die
Platten auf einer Unterlage im Trockenschrank bei
170°C über 45 Minuten ausgehärtet werden können.

Nach dem Aushärten haben die Platten eine Biegefestigkeit von 35 N/mm$^2$, die Durchbiegung weist einen Wert
von 1,7 mm auf.
Für eine Bearbeitung mit dem Schieferhammer sind die
Platten zu spröde.

b) Mit der unter a) genannten Imprägnier-Lösung in gleicher Menge werden Rohplatten nach Beispiel 4, mit der
Biegefestigkeit von 6 N/mm$^2$ imprägniert und wie unter
a) gehärtet. Die Biegefestigkeit ist mit 32 N/mm$^2$ höher, als erfindungsgemäß angestrebt ist. Die Durchbiegung ist mit 1,8 mm zu gering, Lochen und Behauen mit
dem Schieferhammer ist nicht möglich, vielmehr entstehen Risse, Ausplatzungen oder Brüche.
Es zeigt sich, daß das spröde Phenolharz nicht flexible
Formkörper herzustellen erlaubt, selbst wenn geeignete
Rohplatten gemäß Beispiel 4 verwendet werden.

Beispiel 7: Imprägnierung                    Vergleich

Folgende Rezeptur eines ungehärteten Polyesters wird analog Beispiel 6 auf Platten des Beispiels 1 aufgebracht.

35,0 g Polyesterharz Alpolit UP 002    (Höchst AG) Basis Or-
                                        thophthalsäure/Glykol

65,0 g Polyesterharz Alpolit UP 130    (Höchst AG) Basis
                                        Isophthalsäure/Glykol

5,0 g Styrol

1,5 g Trigonox XL

0,3 g Co-Beschleuniger 1-%ig in Styrol

Die Platten werden 40 Minuten bei 140°C ausgehärtet.
Die Biegefestigkeit dieser Platten liegt bei 33 N/mm$^2$
bei einer Durchbiegung von 2,8 mm.

Auch diese Platten lassen sich nicht mit einem Schieferhammer lochen und behauen, da sie zu spröde sind.


Beispiel 8: Imprägnierung                    Vergleich

Folgende Rezeptur eines feuchtigkeitshärtenden Polyurethans wird analog Beispiel 6 auf Platten des Beispiels
1 aufgebracht.
50 Gew.-Teile Poly-Isocyanat Desmodur E 21(Bayer AG)präpoly-
                                        meres Polyisocyanat

25 Gew.-Teile Xylol
25 Gew.-Teile Methylisobutylketon

Die Platten wurden nach 10 Minuten Ablüftzeit 60 Minuten
bei 150°C getrocknet. Die Luft im Trockenschrank wurde
mit Wasserdampf angereichert.

Die Biegefestigkeit dieser Platten liegt bei 30 N/mm$^2$
bei einer Durchbiegung von 3,3 mm.

Auch diese Platten lassen sich nicht mit einem Schieferhammer bearbeiten.

-16-

Beispiel 9: Imprägnierung                    Vergleich

Folgende Rezeptur eines Epoxidharzes wird analog Beispiel 6 auf Rohplatten des Beispiels 1 aufgebracht.

100 Gew.-Teile Epikote 828 (Epoxidharz der Shell) Basis Bisphenol-A-diglycidylether 80 Gew.-Teile Polyaminoamid Versamid 140 (Schering AG)

Die Biegefestigkeit dieser Platten steigt auf 33 N/mm$^2$ an. Die Härtung gemäß Beispiel 8. Die Durchbiegung beträgt 2,2 mm.

Die Bearbeitung mit dem Schieferhammer ist nicht möglich.

Beispiele 10 bis 12

Rohplatten nach Beispiel 4 mit einer Biegefestigkeit nach der Härtung von 6 $N/mm^2$ werden mit Imprägnierharzlösungen nach den Beispielen 7 bis 9 in dort genannter Menge imprägniert und, wie im jeweiligen Beispiel genannt, gehärtet.

| Beispiel | 10 | 11 | 12 |
|---|---|---|---|
| Imprägnierharz aus Beispiel | 7 | 8 | 9 |
| Biegefestigkeit nach Impr. $N/mm^2$ | 27 | 20 | 29 |
| Durchbiegung mm | 16 o.B. | 16 o.B. | 6,3 |
| Lochen x | + | + | + |
| Behauen x | + | + | - |

Imprägnierte Platten nach Beispiel 12 haben erfindungsgemäße, jedoch geringe Werte der Durchbiegung und geringe Bearbeitbarkeit; die Eignung als z. B. Wandplatten ist gegeben, nicht aber als Dachplatten, offenbar wegen vergleichsweise geringerer Flexibilität des hier verwendeten Epoxidharzes.

o.B. = ohne Bruch (nach DIN 51090 )
x    = mit Schieferhammer

Beispiel 13     Rohplatten - Harzanteil
                3,5 Gew.-%

Nach Beispiel 1 wird folgender Ansatz aufbereitet:

  250 g Phenolharz T 777 (70 Gew.-%ig)
   25 g Glykol
3.507 g Quarzsand F 32
1.278 g Quarzmehl W 8
   25 g Ceasit 1
   50 g Eisenoxid 0095
  150 g Norfil Glaskugeln 150

Die Biegefestikeit der ausgehärteten Platten im Format
200 x 300 x 4 mm mit strukturierter Oberfläche beträgt
4 N/mm$^2$.

Beispiel 14     Rohplatten - Harzanteil
                3,5 Gew.-%

Aufbereitung eines 500 kg Ansatzes in einem Eirich-
Mischer Type R 15.

350,7 kg Quarzsand F 32
  5,0 kg Eisenoxid 0095   wurden 15 Sekunden vorgemischt,
                          dann
 25,0 kg Phenolharz T 777 (70 Gew.-%ig) in 1 Minute zugegeben und in 2 Minuten gemischt, danach
128,0 kg Quarzmehl W 8    eingerührt und noch 4 Minuten
                          nachgemischt.Danach wurden
 10,0 kg Eisenglimmer SG  zugegeben und noch 1 Minute
                          nachgemischt.

Die Biegefestigkeit der ausgehärteten Platten im Format
200 x 300 x 4 mm mit strukturierter Oberfläche beträgt
4 N/mm$^2$.

Beispiel 15    (Imprägnierung)

Anwendungstechnisch gut zu bearbeitende Platten erhält man, wenn Rohplatten aus Beispiel 13 bei einer Temperatur von 120 °C beidseitig mit je 250 g/m$^2$ folgender Rezeptur imprägniert werden:

55    Teile Polyesterharz Vestopal 320
10    Teile Polyesterharz Vestopal 155
20    Teile Styrol
15    Teile Polyisocyanat Desmodur E 21
 1,5 Teile Trigonox C

Der Auftrag der Imprägnierung geschieht mit einer Gießmaschine bei einer Vorschubgeschwindigkeit von 60 m/min. Die Aushärtung erfolgt über eine Zeit von 30 Minuten bei 140 °C.

Die Biegefestigkeit der Platten beträgt 22 N/mm$^2$ bei einer Durchbiegung von 6,8 mm.

Beispiel 16    (Imprägnierung)

Beim Imprägnieren der Rohplatten aus Beispiel 14 ist eine Viskositätserniedrigung durch Styrolzugabe nicht erforderlich.

Bei einer Plattentemperatur von 120 °C kann problemlos 200 g/m$^2$ folgender Rezeptur je Plattenseite aufgenommen werden:

70    Teile Polyesterharz UP 130
10    Teile Polyesterharz UP 002
20    Teile Polyisocyanat Desmodur N 75
 1,3 Teile Trigonox C

Nach der Imprägnierung erfolgt eine Lackierung der Oberseite mit folgender Lackrezeptur eines 2-komponentigen Lackes.

0180739

1. Komponente

64,1 Teile Degalan LS 50/100
3,4 Teile Ti O$_2$ RN 57 P
2,5 Teile Helioechtschwarz
0,65 Teile Chromophthalgelb 8 G
0,5 Teile K + E 4487 blau
2,0 Teile Mattierungsmittel TS 100
18,0 Teile Xylol
7,8 Teile Ethylglykolacetat
0,05 Teile Byk 104 S
1,0 Teile Siliconöl 1 %ig in Xylol


2. Komponente

10,0 Teile Desmodur N 75

Die gemeinsame Härtung der Imprägnierung und des Lackes geschieht bei 140 $^{\circ}$C über 30 Minuten.

Die Platten haben nach der Härtung, bei einer Durchbiegung von 5,3 mm, eine Biegefestigkeit von 26 N/mm$^2$ und lassen sich trotz der geringen Durchbiegung excellent mit den Werkzeugen der Dachdecker bearbeiten.

## 1  Patentansprüche

1. Verfahren zum Herstellen von flexiblen Formkörpern aus hochgefüllten, härtbaren Massen auf Basis von duroplastischen Kunststoffen, wobei ein Rohkörper aus härtbaren, rieselfähigen Massen mit Gehalten von 2,0 bis 7,0, vorzugsweise 3,5 bis 5,0 Gew.-% Harzbindemitteln, ggf. 1 bis 5 Gew.-% Lösungsmitteln wie Wasser, Alkohol, Styrol oder deren Mischungen, ggf. ein Härter oder eine Kombination mit einem organischen oder anorganischen Härtungssystem,

98 bis 88, vorzugsweise 96,5 bis 90 Gew.-% Füllstoffe wie Quarzsand, Quarzmehl, Gesteinsmehle wie Basaltmehl, Schwerspat, Kreide, Schlacken-, Schwerspat-, Schiefer- und Korund-Mehl o. dgl. bzw. deren Mischungen einer Korngröße von 0 bis 1 mm, vorzugsweise 0-0,5 mm und ggf. Hilfsstoffen wie Beschleunigern, Farbmitteln o. dgl.

ggf. nach Trocknen bis zum Entstehen rieselfähiger Massen durch Formpressen hergestellt wird, der Rohkörper entformt, auf der Oberfläche mit einem Lack und/oder einer Harzlösung versehen und anschließend, ggf. zusätzlich nach dem Entformen, bei erhöhter Temperatur gehärtet wird,

gekennzeichnet durch die Maßnahmen:

a) daß ein Rohkörper mit geringer Biegefestigkeit von 1 bis 15, vorzugsweise 2 bis 10 $N/mm^2$, durch Verwendung von duroplastischen Harzen als Harzbindemittel der rieselfähigen Masse durch

b) Verpressen bei Drucken von 100 bis 500, vorzugsweise 150 bis 300 $kp/cm^2$ hergestellt und entformt,

c) gehärtet

-2-

d) der gehärtete Rohkörper auf der Oberfläche ein- oder beidseitig mit einer in den Körper eindringenden, elastischen Imprägnierung einer Lösung mit Harzanteilen von 50 bis 100, vorzugsweise 80 bis 100 Gew.-% eines flexiblen und elastischen Harzes versehen und danach bei Temperaturen von 100 bis 180° C gehärtet und

e) ggf. lackiert und gehärtet wird.

2. Verfahren nach Anspruch 1, dadurch gekennzeichnet, daß das Harz zur Herstellung des Rohkörpers ein Phenolharz, Melaminharz, Polyesterharz, Epoxidharz, Acrylatharz oder Polyurethanharz ist.

3. Verfahren nach Anspruch 1, dadurch gekennzeichnet, daß das Harz der Imprägnierlösung aus einem ungesättigten Polyesterharz und/oder einem Polyisocyanat, ggf. Epoxidharz oder Acrylatharz besteht oder dieses enthält.

4. Verfahren nach Anspruch 3, dadurch gekennzeichnet, daß die Viskosität des Imprägnierharzes 20 bis 120 sec. (DIN-Becher 4) beträgt.

5. Verfahren nach den Ansprüchen 3 oder 4, dadurch gekennzeichnet, daß die Lösung des Imprägnierharzes in Mengen von 2 bis 20, vorzugsweise 4 bis 15, sehr bevorzugt 5 bis 10 Gew.-% des Gewichts auf den Rohkörper aufgetragen wird.

0180739

6. Verfahren nach mindestens einem der vorangehenden Patentansprüche, dadurch gekennzeichnet, daß der härtbaren Masse des Rohkörpers 0,1 bis 2 Gew.-% Fasermaterialien wie Glasfaser, Polyamid- oder Polyurethanfaser, Steinwolle- oder Mineralfaser oder flexible körnige Füllstoffe wie Glashohlkugeln, Glimmer, Graphit, Eisenglimmer, Schiefermehl bzw. -korn nach Abmischen der übrigen Komponenten zugesetzt werden.

7. Verfahren nach mindestens einem der vorangehenden Patentansprüche, dadurch gekennzeichnet, daß die Oberfläche des imprägnierten Formkörpers vor oder nach der Aushärtung mit einem ggf. härtbaren Lack, vorzugsweise auf Basis von Polyurethan, Polyacrylat bzw. Polymethacrylat, Polyacrylnitril-Copolymerisaten o. dgl., ggf. unter Zusatz von Silanen versehen wird.